# EUROPEAN PATENT SPECIFICATION

(11) **EP 2 642 210 B1**
(45) Date of publication and mention of the grant of the patent: **16.03.2016**
(21) Application number: 13160256.7
(22) Date of filing: 20.03.2013
(51) Int. Cl.: F24D 19/00, F24D 19/02, F28D 1/053, F28D 1/02, F28D 21/00

(54) **WALL RADIATOR**
WANDHEIZKÖRPER
RADIATEUR MURAL

(30) Priority: 20.03.2012 IT BO20120147
(43) Date of publication of application: 25.09.2013
(73) Proprietor: IRSAP SPA, 45031 Arqua' Polesine (IT)
(72) Inventor: Zen, Alessandro, 45100 Rovigo (IT); Baratella, Fabio, 45021 Badia Polesine (IT); Pozzati, Marco, 45100 Rovigo (IT)
(74) Representative: Boggio, Luigi

(56) References cited:
- AT-A4- 508 134
- DE-U1-202009 002 307
- FR-A1- 2 947 040

## Description

The present invention relates to a wall radiator in which the circulation of heated air inside the radiator has been improved.

In the field of domestic and industrial heating wall radiators are known that are suitable for direct heating of the air present in the room.

A wall radiator of known type generally comprises the following devices:
- a heating body substantially comprising, in turn, an upper horizontal header, hydraulically connected to a lower horizontal header by means of a plurality of vertical pipes, arranged on a first row and on a second row facing each other;
- a radiant plate integral with the heating body and facing a room to be heated; and
- one or more supports for supporting the heating body on a wall.

For instance in AT 508 134 A4 (MANFRED LECHNER KG) it is described:
a wall radiator comprising:
   - a heating body, which comprises an upper horizontal header, hydraulically connected to a lower horizontal header by means of a plurality of vertical pipes, arranged on a first row and on a second row facing .each other;
   - a. radiant plate integral with the heating body for facing a room to be heated;
   - support means which can be mounted on a wall for supporting the heating body; and defining a first space between said second row of said vertical pipes and said wall
   - ventilation means, suitable for drawing in ambient air, to blow it towards the heating body, so as to introduce it once again into the room as hot air. Furthermore, the wall radiator is provided with a first channel, used for inflow of the air to be heated, defined by said first space, and a second channel, used to heat the air and for outflow of the heated air towards the room, defined by a second space comprised between the first row and the second row of vertical pipes. The first channel is vertical and substantially parallel to the second channel, which is also vertical, and the ventilation means are arranged astride the second row between the first channel and the second channel. The ambient air is drawn in from above and from below and, once it has been heated by the heating body, is blown laterally into the room to be heated by the ventilation means.

However, current radiators of the aforesaid type are unable to make efficient use of the heat produced by the heating body, as heat exchange occurs prevalently through natural convection and radiation. Of course, this fact is to the disadvantage of the output of the radiator, which is not optimal.

Therefore, the object of the present invention is to provide a wall radiator in which there is also a targeted use of the forced convection to increase the calories produced by the heating body.

According to the present invention there is provided, therefore, a wall radiator according to Claim 1 or to any one of the Claims depending directly or indirectly on Claim 1.

For a better understanding of the present invention a preferred embodiment will now be described purely by way of non-limiting examples and with reference to the accompanying drawings, wherein:
- Fig. 1 illustrates a three-dimensional front view of a wall radiator according to the present invention;
- Fig. 2 shows a cross section of an embodiment of the wall radiator of Fig. 1;
- Fig. 3 shows a rear view (in a different scale) of the wall radiator according to Fig. 2;
- Fig 4 shows a three-dimensional partial rear view (in different scale) of a wall radiator according to Figs. 2, 3;
- Fig. 5 shows a three-dimensional rear view (in a different scale) of a wall radiator according to Figs. 2, 3, 4, wherein the radiator is in an open configuration (i.e. with the functional structure of the radiator partially detached from a frame);
- Fig. 6 shows a cross section of a second embodiment of the wall radiator of Fig. 1 which does not form part of the present invention; and
- Fig. 7 shows a rear view (in a different scale) of the wall radiator according to Fig. 6.

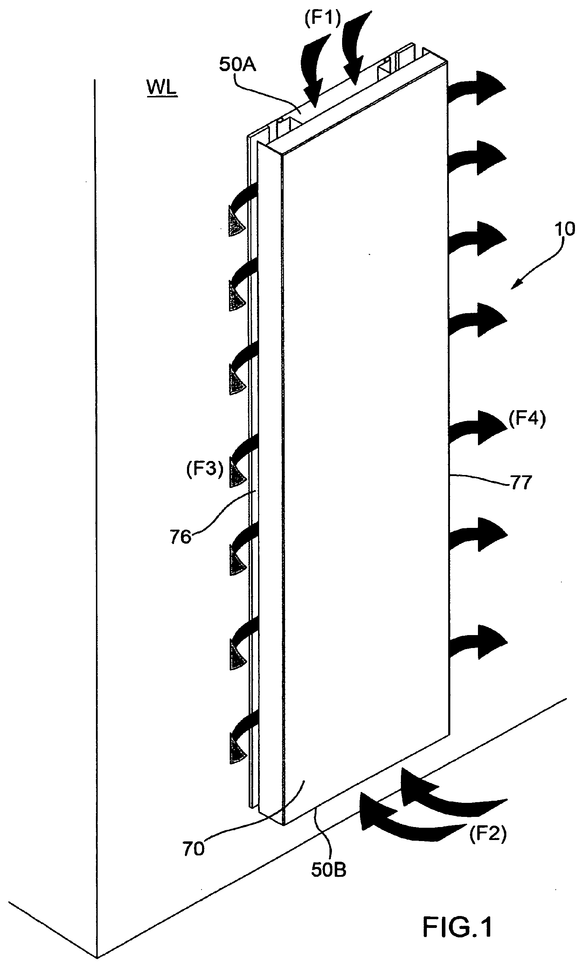

In Fig. 1 a wall radiator according to the present invention is indicated, as a whole, with reference number 10. Radiator 10 is fixed to a wall (WL) with means that will be specified in greater detail below.

From observing Fig. 1 it can be seen that the ambient air is drawn in from above (according to an arrow (F1)) and from below (according to an arrow (F2)) and, once it has been heated by radiator 10, is blown laterally into the room to be heated (according to arrows (F3), (F4)).

The fact that the ambient air is drawn in vertically and blown horizontally (i.e. transverse to the direction in which it is drawn in) into the room represents one of the main features of the present invention.

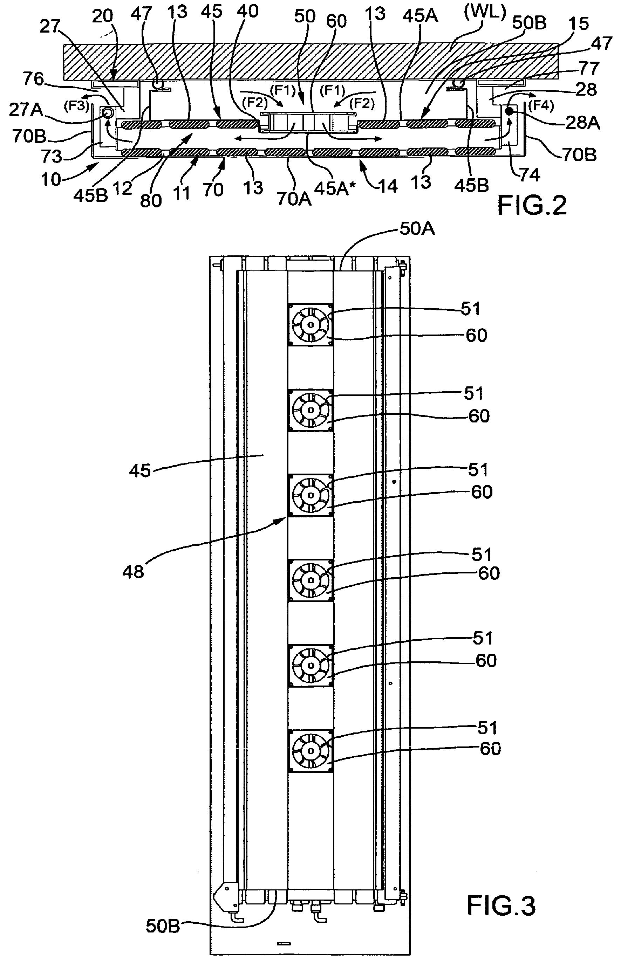

As illustrated in greater detail in Fig. 2, radiator 10 comprises a heating body 11, substantially comprising, in a known manner, an upper horizontal header (not shown), hydraulically connected to a lower horizontal header 12 by means of a plurality of vertical pipes 13, arranged on two rows 14, 15 facing each other.

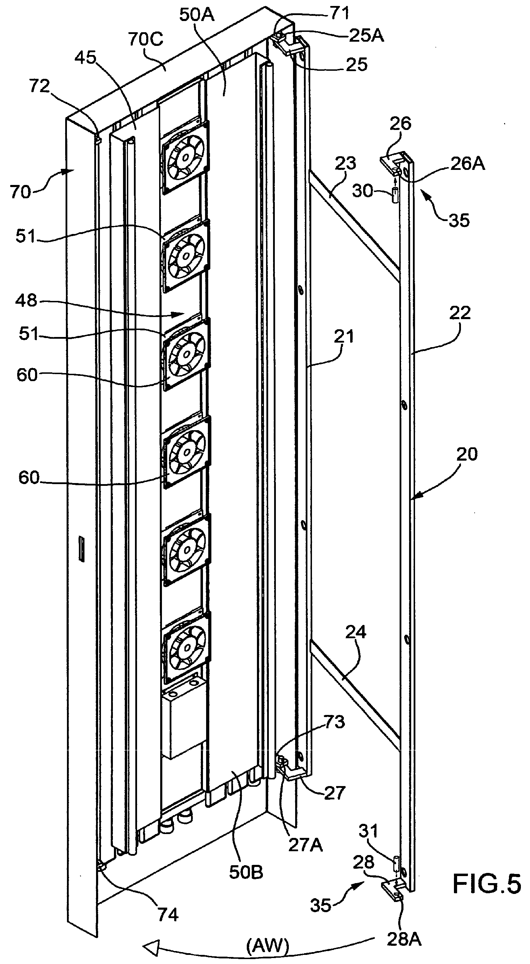

Radiator 10 is fixed to wall (WL) by means of a supporting frame 20 shown in greater detail in Fig. 5.

As shown in Fig. 5, supporting frame 20 comprises two lateral uprights 21, 22 held together by two transverse elements 23, 14.

Moreover, frame 20, substantially rectangular in shape, has, at each of the four corners thereof, a respective bracket 25, 26, 27, 28 (Fig. 5).

In the embodiment shown in Fig. 5, each left bracket 25, 27 has a corresponding hinge 25A, 27A. The functional structure of radiator 10 is hinged to hinges 25A, 27A, as will be explained in greater detail below.

By observing Fig. 5 it can also be seen that each right bracket 26, 28 has a corresponding through hole 26A, 28A to which, in use (Fig. 2), a corresponding pin 30, 31 is coupled. The assembly formed by through holes 26A, 28A and by pins 30, 31 forms a locking and closing device 35 of the functional structure of radiator 10 on frame 20.

Positioning, on the left or on the right, of the hinges, on the one side, and, respectively, of the holes and pins, on the other side, depends on how the functional structure of the radiator 10 is to be opened.

In the example shown in Fig. 5, as the functional structure of radiator 10 must open according to a direction given by an arrow (AW), hinges 25A, 27A, on one side, and holes 26A, 28A with respective pins 30, 31, on the other side, are arranged in the configuration previously described.

Hinged opening of the functional structure of radiator 10 with respect to frame 20 allows inspection of the back of the functional structure itself, allowing the repair or replacement of any defective or broken devices. Naturally, the hinged opening of radiator 10 allows it to be cleaned.

Whereas, of course if the functional structure of radiator 10 is to be opened according to an opposite direction with respect to the direction indicated by arrow (AW), the positions of the hinges must be reversed (positioning them on the right) with those of the holes plus pins (positioning them on the left). In actual fact, to simplify construction of radiator 10, hinges 25A, 27A also comprise, in each case, an assembly of a pin and of a respective hole.

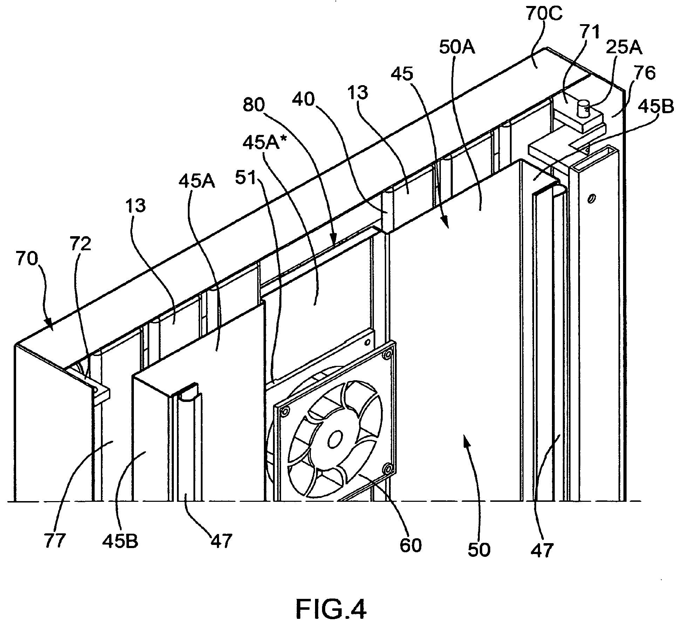

As shown in particular in Figs. 2, 4, two vertical pipes 13 have been removed from inner row 15 of vertical pipes 13 so as to create a vertical compartment 40 substantially rectangular in shape. As shall be seen, this compartment 40 receives a portion of a plate 45 substantially in the shape of a box.

In particular, shaped plate 45 comprises a rectangular central part 45A from which, in use (Fig. 2), a portion 45A* extends towards other outer row 14 of vertical pipes 13. It can be noted that the surface of portion 45A* is substantially the same as that of vertical compartment 40 so that, in use, this portion 45A* can be inserted into vertical compartment 40 itself (Fig. 2).

From the vertical sides of rectangular central part 45A there extend two tabs 45B, each advantageously configured as a bracket. On each short side of each tab 45B there is affixed a respective sealing profile 47, which, in use (Fig. 2) rests against wall (WL) for purposes that will be explained in more detail below.

Therefore, between shaped plate 45 and wall (WL) a first channel 50 is created (Fig. 2) closed laterally by tabs 45B and by sealing profiles 47, but open at the top and at the bottom (upper inlet 50A, and lower inlet 50B; Fig. 1) to allow entry of the ambient air to be heated (arrows (F1), (F2)).

As shown in Figs. 2, 3, 4, 5 on portion 45A* of shaped plate 45 there is a plurality of through holes 51, each suitable to receive a fan 60 connected to an electricity supply system (not shown). Through holes 51, and therefore also respective fans 60, are placed, one on top of the other, along the centreline of shaped plate 45 according to a vertical row 48.

Figs. 2, 3, 4 and 5 also show how radiator 10 comprises a radiant plate 70 integral with the outer surface of pipes 13 that form row 14. Also radiant plate 70 is substantially in the shape of a box, comprising a main central body 70A (Fig. 2) provided laterally with two tabs 70B that project towards wall (WL), however without touching it. The two spaces comprised between two tabs 70B and wall (WL) define two lateral passages 76, 77, through which hot air flows out into the room.

From the upper edge of main central body 70A there also projects an upper band 70C (Figs. 4, 5), which has a thickness substantially the same as the distance between the two rows 14, 15 of vertical pipes 13.

In proximity of each angle of heating body 11 there is welded a respective metal bar 71, 72, 73, 74 (Fig. 5), projecting towards wall (WL), which is used to form the aforesaid hinges 25A, 27A, or the aforesaid locking and closing device 35 according to the methods described above.

Therefore, a second channel 80 is formed, defined substantially by the space comprised between two rows 14, 15 of vertical pipes 13. This second channel 80 is closed at the top by upper band 70C of radiant plate 70, but is open laterally (lateral passages 76, 77) to allow hot air, produced by heating body 11, to flow out of radiator 10 according to arrows (F3), (F4).

It must also be noted that, through the simple use of a shaped plate 45 (attached to row 15 of vertical pipes 13) and of a radiant plate 70 (to row 14 of vertical pipes 13) two parallel channels 50, 80 are thus produced, each used for a different purpose.

In fact, first channel 50 is used for drawing in the air to be heated from the room in which radiator 10 is located, whereas second channel 80 is used firstly for heating the air blown by fans 60, and subsequently for distribution of the hot air into the room in which radiator 10 is located.

Therefore, there is a comparatively clear separation between the drawn air to be heated and the air introduced into the room, to the advantage of the output of radiator 10.

It must also be noted that the environment is heated by convection and radiation also from the outer surface (i.e. the surface facing the room) of radiant plate 70, in turn heated by conduction, by the hot water that passes through vertical pipes 13 belonging to row 14.

Operation of radiator 10 shown in Figs. 1-5 is as follows:
- the ambient air is drawn into first channel 50 according to arrows (F1), (F2) due to the vacuum created in this first channel 50 by fans 60;
- this air is blown by fans 60 towards second channel 80 where heating of the air itself takes place; and
- the hot air is distributed laterally diverted by two tabs 70B (lateral passages 76, 77).

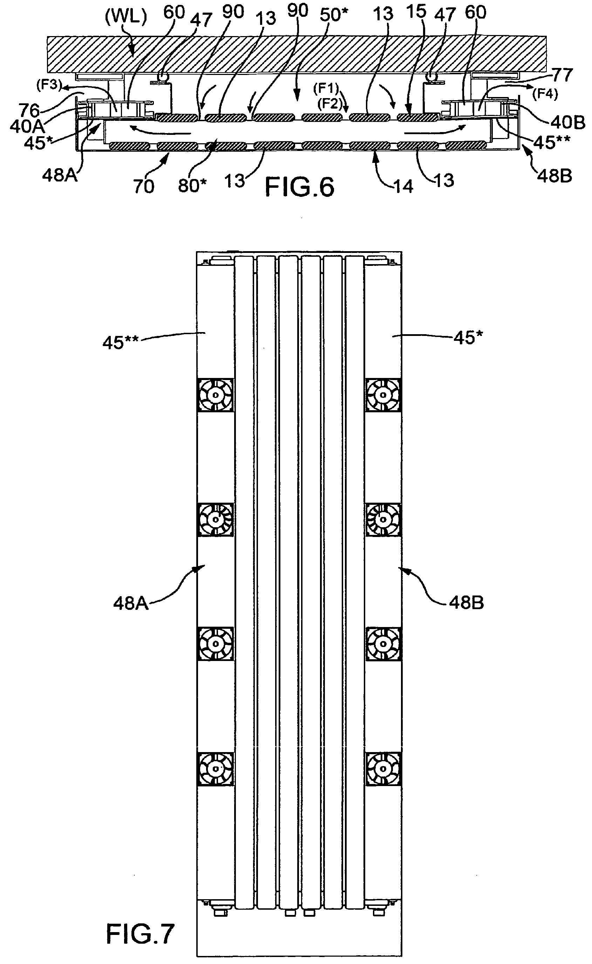

In accordance with a second embodiment, which does not form part of the present invention, shown in Figs. 6 and 7, in which corresponding elements are indicated with the same numbers and letters used in the first embodiment shown in Figs. 1-5, there are provided two vertical rows 48A, 48B of fans 60 located at the two sides of the two rows 14, 15.

Each vertical row 48A, 48B of fans 60 is supported by a respective plate 45*, 45**, a portion of which occupies a corresponding compartment 40A, 40B, which, in each case, is obtained by removing a corresponding pair of vertical pipes 13. It must also be observed that the two plates 45*, 45** are shaped so as to define, together with the respective sealing profiles 47, first channel 50*.

The absence of a closing plate enables the outflow of air from first channel 50* to second channel 80* also through a plurality of gaps 90 which are located between vertical pipes 13 belonging to row 15. It must be noted that the gaps located between one vertical pipe 13 and the other of row 14 are instead closed by radiant plate 70.

Also in this case, first channel 50* is formed, defined on one side, by wall (WL) and, on the other side, by the assembly of the portions of surface of pipes 13 belonging to row 15 facing wall (WL) itself. The lateral edges of this channel 50* are formed by the assembly of the two plates 45B and of the two respective sealing profiles 47.

Second channel 80* is instead formed, on the one side, by the assembly of the portions of surface of pipes 13 belonging to row 15 facing row 14 and, on the other side, by the inner surface of radiant plate 70.

It can also be noted that fans 60 always cause suction of the ambient air from first channel 50* and its passage through gaps 90, with the methods described above. Moreover, fans 60 are also responsible for sending the heated air towards lateral passages 76, 77 according to arrows (F3), (F4).

In both the embodiments the radiator can be provided with sensors (not shown) suitable to detect the operating parameters of the radiator itself and/or of the room in which it is located. These sensors can be, for example, thermometers, flow-meters, etc. the functions of the radiator are controlled electronically by means of an electronic control unit, preferably, but not necessarily, installed on the radiator itself.

The advantages of the wall radiator forming the subject of the present invention are the following:
- a better use of the calories produced by the heating body with a consequent increase in its output;
- the heating system can operate as a normal radiator, which exchanges heat with the room by radiation and natural convection, but which, if necessary, through the electronic control system, can increase its thermal power through forced convection caused by the fans;
- reversibility of the heating system; i.e. its opening can be on the right or left, according to architectural boundaries and installation requirements; and
- simpler maintenance and cleaning.

## Claims

1. A wall radiator (10) comprising:
- a heating body (11), which comprises an upper horizontal header, hydraulically connected to a lower horizontal header by means of a plurality of vertical pipes (13), arranged on a first row (14) and on a second row (15) facing each other;
- a radiant plate (70) integral with said heating body (11) for facing a room to be heated;
- support means (20) which can be mounted on a wall (WL) for supporting said heating body (11); and defining a first space between said second row of said vertical pipes (13) and said said wall (WL);
- ventilation means (60), suitable for drawing in ambient air, to blow it towards said heating body (11), so as to introduce it once again into the room as hot air;
**wherein** there is provided a first channel (50), used for inflow of the air to be heated, defined by said first space, and a second channel (80), used to heat the air and for outflow of the heated air towards the room, defined by a second space comprised between said first row (14) and said second row (15) of vertical pipes (13); said first channel (50) being vertical and substantially parallel to said second channel (80), which is also vertical, and said ventilation means (60) being arranged astride said second row (15) between said first channel (50) and said second channel (80);
and **wherein** the ambient air is drawn in from above (F1) and from below (F2) and, once it has been heated by said heating body (11), is blown laterally into the room to be heated ((F3), (F4)) by said ventilation means (60);
said wall radiator being **characterised in that** the ambient air enters said first channel (50) vertically from at least one upper inlet (50A) and from at least one lower inlet (50B); whereas the air heated by said heating body (11) flows out horizontally through at least one lateral passage (76, 77).

2. A radiator (10) according to Claim 1, **characterised in that** said ventilation means (60) are housed in at least one compartment (40) created by removing at least one of said vertical pipes (13).

3. A radiator (10) according to Claim 2, **characterised in that** said ventilation means (60) are supported by at least one shaped plate (45), inserted, at least partially, in said at least one compartment (40).

4. A radiator (10) according to any of the previous Claims, **characterised in that** said second channel (80) is closed on one side by said radiant plate (70).

5. A radiator (10) according to any of the previous Claims, **characterised in that** the functional structure of said radiator (10) itself is hinged to a frame (20) by hinging means (25A, 27A).

6. A radiator (10) according to Claim 5, **characterised in that** it is provided with locking and closing means (35), arranged on the opposite side with respect to said hinging means (25A, 27A).

## Patentansprüche

1. Wandradiator (10), umfassend:
- einen Heizkörper (11), welcher ein oberes horizontales Grundrohr, welches vermittels einer Mehrzahl an in einer ersten Reihe (14) und in einer dieser gegenüber liegenden zweiten Reihe (15) angeordneten, vertikalen Rohren (13) hydraulisch mit einem unteren horizontalen Grundrohr verbunden ist, umfasst;
- eine mit dem Heizkörper (11) integral ausgeführte Radiatorplatte (70), welche einem zu beheizenden Raum gegenüber liegt;
- Stützmittel (20), welche an einer Wand (WL) montiert werden können, zur Stützung des Heizkörpers (11), wobei die Stützmittel (20) einen ersten Raum zwischen der zweiten Reihe (15) der vertikalen Rohre (13) und der Wand (WL) definieren;
- Ventilatormittel (60), geeignet zum Einsaugen von Umgebungsluft, um diese Umgebungsluft in Richtung des Heizkörpers (11) zu blasen und als warme Luft nochmals in den Raum einzubringen;
wobei
ein erster Kanal (50) vorgesehen ist, welcher zum Einströmen der zu erwärmenden Luft verwendet wird, wobei der erste Kanal (50) durch den ersten Raum definiert wird, und ein zweiter Kanal (80) vorgesehen ist, welcher zum Erwärmen der Luft und zum Ausströmen der erwärmten Luft in den Raum verwendet wird, wobei der zweite Kanal (80) durch einen zweiten Raum, welcher zwischen der ersten Reihe (14) und der zweiten Reihe (15) an vertikalen Rohren (13) gebildet ist, wobei der erste Kanal (50) vertikal und im Wesentlichen parallel zu dem zweiten Kanal (80) ausgerichtet ist, welcher ebenfalls vertikal ausgerichtet ist, und wobei die Ventilatormittel (60) inmitten der zweiten Reihe (15) zwischen dem ersten Kanal (50) und dem zweiten Kanal (80) angeordnet sind; und
wobei die Umgebungsluft von oben (F1) und von unten (F2) angesaugt ist und, sobald sie von dem Heizkörper (11) erwärmt ist, vermittels der Ventilatormittel (60) seitlich in den zu beheizenden Raum geblasen wird (F3, F4);
wobei der Wandradiator (10) **dadurch gekennzeichnet ist, dass** die Umgebungsluft in den ersten Kanal (50) vertikal über wenigstens einen ersten oberen Zugang (50A) und über wenigstens einen unteren Zugang (50B) einströmt, wohingegen die durch den Heizkörper (11) erwärmte Luft horizontal über wenigstens eine seitliche Passage (76, 77) ausströmt.

2. Wandradiator (10) nach Anspruch 1, **dadurch gekennzeichnet, dass** die Ventilatormittel (60) in wenigstens einem durch Entfernung wenigstens eines vertikalen Rohrs (13) gebildeten Aufnahmeabteil (40) aufgenommen ist.

3. Wandradiator (10) nach Anspruch 2, **dadurch gekennzeichnet, dass** die Ventilatormittel (60) vermittels wenigstens einer geformten Platte (45), die zumindest abschnittsweise in das Aufnahmeabteil (40) eingeführt ist, gestützt sind.

4. Wandradiator (10) nach einem der vorhergehenden Ansprüche, **dadurch gekennzeichnet, dass** der zweite Kanal (80) auf einer Seite vermittels der Radiatorplatte (70) geschlossen ist.

5. Wandradiator (10) nach einem der vorhergehenden Ansprüche, **dadurch gekennzeichnet, dass** die funktionale Struktur des Wandradiators (10) vermittels Gelenkmitteln (25A, 27A) an einem Rahmen (20) angelenkt ist.

6. Wandradiator (10) nach Anspruch 5, **dadurch gekennzeichnet, dass** er mit Verriegelungs- und Verschlussmitteln (35) ausgebildet ist, welche bezüglich der Gelenkmittel (25A, 27A) auf der gegenüber liegenden Seite angeordnet sind.

## Revendications

1. Radiateur mural (10) comprenant :
- un corps de chauffe (11) qui comprend un collecteur horizontal supérieur hydrauliquement raccordé à un collecteur horizontal inférieur au moyen d'une pluralité de tuyaux verticaux (13), agencés sur une première rangée (14) et sur une seconde rangée (15) se faisant face ;
- une plaque rayonnante (70) faisant corps avec ledit corps de chauffe (11) pour faire face à une pièce à chauffer ;
- des moyens de support (20) qui peuvent être montés sur un mur (WL) pour supporter ledit corps de chauffe (11) ; et définissant un premier espace entre ladite seconde rangée desdits tuyaux verticaux (13) et ledit mur (WL) ;
- des moyens de ventilation (60) appropriés pour aspirer l'air ambiant, le souffler vers ledit corps de chauffe (11), afin de l'introduire à nouveau dans la pièce sous la forme d'air chaud ;
dans lequel on prévoit un premier canal (50), utilisé pour l'entrée de l'air à chauffer, défini par ledit premier espace , et un second canal (80) utilisé pour chauffer l'air et pour la sortie de l'air chauffé vers la pièce, défini par un second espace compris entre ladite première rangée (14) et ladite seconde rangée (15) de tuyaux verticaux (13) ; ledit premier canal (50) étant vertical et sensiblement parallèle audit second canal (80), qui est également vertical, et lesdits moyens de ventilation (60) étant agencés à califourchon sur ladite seconde rangée (15) entre ledit premier canal (50) et ledit second canal (80) ;
et dans lequel l'air ambiant est aspiré de dessus (F1) et de dessous (F2) et une fois qu'il a été chauffé par ledit corps de chauffe (11), est soufflé latéralement dans la pièce à chauffer ((F3), (F4)) par lesdits moyens de ventilation (60) ;
ledit radiateur mural étant **caractérisé en ce que** l'air ambiant pénètre dans ledit premier canal (50) verticalement à partir d'au moins une entrée supérieure (50A) et à partir d'au moins une entrée inférieure (50B) ; alors que l'air chauffé par ledit corps de chauffe (11) sort horizontalement par au moins un passage latéral (76, 77).

2. Radiateur (10) selon la revendication 1, **caractérisé en ce que** lesdits moyens de ventilation (60) sont logés dans au moins un compartiment (40) créé en retirant au moins l'un desdits tuyaux verticaux (13).

3. Radiateur (10) selon la revendication 2, **caractérisé en ce que** lesdits moyens de ventilation (60) sont supportés par au moins une plaque profilée (45), insérée au moins partiellement, dans ledit au moins un compartiment (40).

4. Radiateur (10) selon l'une quelconque des revendications précédentes, **caractérisé en ce que** ledit second canal (80) est fermé d'un côté par ladite plaque rayonnante (70).

5. Radiateur (10) selon l'une quelconque des revendications précédentes, **caractérisé en ce que** la structure fonctionnelle dudit radiateur (10) lui-même est articulée par charnière par rapport à un bâti (20) par des moyens de charnière (25A, 27A).

6. Radiateur (10) selon la revendication 5, **caractérisé en ce qu'**il est prévu avec des moyens de verrouillage et de fermeture (35), agencés sur le côté opposé par rapport auxdits moyens de charnière (25A, 27A) .
